# EUROPEAN PATENT SPECIFICATION

(11) **EP 1 094 993 B1**
(45) Date of publication and mention of the grant of the patent: **30.01.2002**
(21) Application number: 99929947.2
(22) Date of filing: 21.06.1999
(51) Int. Cl.: C03C 25/00

(54) **A METHOD OF APPLYING A PROTECTIVE ORGANIC COATING TO AN OPTICAL GLASS FIBRE**
VERFAHREN ZUM AUFBRINGEN EINER ORGANISCHEN SCHUTZSCHICHT AUF EINER OPTISCHEN GLASFASER
PROCEDE POUR APPLIQUER UN REVETEMENT ORGANIQUE PROTECTEUR A UNE FIBRE DE VERRE OPTIQUE

(30) Priority: 26.06.1998 NL 1009503
(43) Date of publication of application: 02.05.2001
(73) Proprietor: Draka Fibre Technology B.V., 5651 CA Eindhoven (NL)
(72) Inventor: BREULS, Antonius, Henricus, Elisabeth, NL-6129 EM Urmond (NL); DE FOUW, Marinus, Jacob, NL-5624 NE Eindhoven (NL)
(74) Representative: Van kan, Johan Joseph Hubert, Ir.
(86) International application number: PCT/NL99/00383
(87) International publication number: WO 00/00446

(56) References cited:
- EP-A- 0 635 554
- JOCHEM C M G ET AL: "HIGH-SPEED BUBBLE-FREE COATING OF OPTICAL FIBRES ON A SHORT DRAWING TOWER" INTERNATIONAL CONFERENCE ON INTEGRATED OPTICS AND OPTICAL FIBRE COMMUNICATION (IOOC) AND EUROPEAN CONFERENCE ON OPTICAL COMMUNICATI (ECOC), VENICE, OCT. 1 - 4, 1985, vol. 1, no. CONF. 5, 11, 1 October 1985 (1985-10-01), pages 515-518, XP002006367 ISTITUTO INTERNAZIONALE DELLE COMUNICAZONI cited in the application

## Description

The invention relates to a method for coating an optical glass fibre or a coated optical glass fibre, wherein said glass fibre is drawn from a preform and passed through an organic liquid coating composition which contains the material for forming said organic coating, followed by adjusting the amount of liquid coating material to be applied to the fibre and curing of the coating liquid to form a solid protective organic layer thereon, wherein a gas is conducted over the liquid coating composition.

A method of this kind is known from EP-A-0 261 772. In the claims of said patent application it is stated that CO₂ is used as said gas, thus minimizing the number of air inclusions that may form upon forming of the coating. The surface of the coating material of the glass fibre is conditioned by means of CO₂. It is stated in the introduction of EP-A-0 261 772 that various gases may be used, such as nitrogen, carbon dioxide, noble gases, especially xenon, neon and argon, and chemically inert gaseous hydrocarbons such as chloroform, Freon (brand name), halogen hydrocarbons or other chlorine- or fluorine-substituted hydrocarbons. In particular, however, CO₂ is used.

A method of the above kind is also known from EP-B-0 200 256, wherein it is indicated that xenon and dichlorodifluoromethane are gases which are usable within this framework.

Jochem et al "High-speed bubble-free coating of optical fibres on a short drawing tower" (IOOC and ECOC), Venice, 1985, part 1, pages 515-518, Istituto Internazionale Delle Comunicazoni discloses the use of several gases in such a process to draw optical fibres. In table 2 one mentioned air, He, A, Xe and CCl₂F₂. However Jochem et al did not indicate the gas composition used according to the invention.

From EP-A-0 635 554 it is known that an optical fiber can be coated with hydrogen silsesquioxane by heating the fiber at a temperature of 50-1000 °C during up to 6 hours. The heating may be conducted at any pressure and under oxidizing or non-oxidizing gaseous environment such as air, O₂, an inert gas (N₂, etc.), ammonia, amines, moisture, N₂O, hydrogen and hydrocarbons. From this disclosure the specific gas used according to the invention cannot be derived.

Further research has shown that a higher-quality bond of the organic material to the glass fibre is obtained by using a specific gas. According to the invention, the method as stated in the introduction is therefore characterized in that nitrous oxide (an N₂O-containing gas) is used as said gas. The term nitrous oxide as used herein should be understood to mean a gas which contains at least 50% N₂O.

Preferably, the gas is introduced at the upper side of the device for applicating the organic coating material to the fibre and carried downstream along with the glass fibre. We also found that with the method according to the invention it also is possible to applicate a second or third organic coating layer to an already coated fibre. The amount of gas supplied to the liquid organic coating material depends on the construction of the device for applicating the coating material and the drawing speed. Nevertheless this amount must be sufficient for preventing entrained air, that comes along with the fibre, to become entrapped in the coating. This amount of gas can be minimized by using specific nozzles or a small diameter shaft.

The invention furthermore relates to the optical glass fibre provided with a protective organic coating formed in accordance with a method wherein an N₂O-containing gas is used as said gas.

## Claims

1. A method for coating an optical glass fibre or a coated optical glass fibre, wherein said glass fibre is drawn from a preform and passed through an organic liquid coating composition which contains the material for forming said organic coating, followed by adjusting the amount of liquid coating material to be applied to the fibre and curing of the coating liquid to form a solid protective organic layer thereon, wherein a gas is conducted over the liquid coating composition, **characterized in that** nitrous oxide (an N₂O-containing gas) is used as said gas.

2. A method according to claim 1, **characterized in that** said nitrous oxide is introduced to said liquid coating composition at the upper side thereof, at the place where the fibre is supplied into the liquid coating composition.

## Patentansprüche

1. Verfahren zum Beschichten einer optischen Glasfaser oder einer beschichteten optischen Glasfaser, wobei die Glasfaser aus einer Vorform gezogen und durch eine organische flüssige Beschichtungszusammensetzung geleitet wird, die das Material zum Erzeugen der organischen Beschichtung enthält, gefolgt vom Einstellen der Menge an auf die Faser aufzutragendem flüssigem Beschichtungsmaterial und Härten der Beschichtungsflüssigkeit unter Bildung einer festen organischen Schutzschicht darauf, wobei ein Gas über die flüssige Beschichtungszusammensetzung geleitet wird, **dadurch gekennzeichnet, daß** Stickstoff(I)oxid (ein N₂O-haltiges Gas) als das Gas verwendet wird.

2. Verfahren nach Anspruch 1, **dadurch gekennzeichnet, daß** das Stickstoff(I)oxid in die flüssige Beschichtungszusammensetzung an deren Oberseite an der Stelle, an der die Faser der flüssigen Beschichtungszusammensetzung zugeführt wird, eingeführt wird.

## Revendications

1. Procédé pour le revêtement d'une fibre de verre optique ou d'une fibre de verre optique revêtue, dans lequel ladite fibre de verre est étirée à partir d'une ébauche et passe à travers une composition de revêtement de liquide organique qui contient la matière pour former ledit revêtement organique, suivi par l'ajustement de la quantité de matière de revêtement liquide à appliquer sur la fibre et la réticulation du liquide de revêtement pour former une couche organique protectrice solide sur son dessus, dans lequel un gaz est conduit sur la composition de revêtement liquide, **caractérisé en ce que** l'on utilise comme ledit gaz de l'oxyde nitreux (un gaz contenant N₂O).

2. Procédé selon la revendication 1, **caractérisé en ce que** ledit oxyde nitreux est introduit dans ladite composition de revêtement liquide sur le côté supérieur de celle-ci à l'endroit où la fibre est introduite dans la composition de revêtement liquide.
